# EUROPÄISCHE PATENTSCHRIFT

(11) **EP 2 530 799 B1**
(45) Veröffentlichungstag und Bekanntmachung des Hinweises auf die Patenterteilung: **14.01.2015**
(21) Anmeldenummer: 12003803.9
(22) Anmeldetag: 14.05.2012
(51) Int. Cl.: H02G 9/02, H02G 15/04

(54) **Vorrichtung zum dichtenden Verschliessen eines Kabelschutzrohrendes**
Device for sealing the end of a cable protection tube
Dispositif de fermeture étanche d'une extrémité de tuyau de protection de câble

(30) Priorität: 03.06.2011 DE 102011103367
(43) Veröffentlichungstag der Anmeldung: 05.12.2012
(73) Patentinhaber: gabo Systemtechnik GmbH, 94559 Niederwinkling (DE)
(72) Erfinder: Geiger, Alexander, 94559 Niederwinkling (DE); Lederer, Roland, 94374 Schwarzach (DE); Karl, Markus, 94327 Bogen (DE)
(74) Vertreter: Schmid, Nils T.F.

(56) Entgegenhaltungen:
- EP-A2- 1 710 868
- EP-B1- 1 289 087
- WO-A1-97/08798
- DE-A1- 19 848 216
- DE-B3-102004 056 859
- DE-U1-202010 006 985

## Beschreibung

Die Erfindung betrifft eine Vorrichtung zum dichtenden Verschließen eines Endes eines mit einem Kabel, wie einer Glasfaser, einem Glasfaserbündel, Einzeldrähten oder dergleichen, belegbaren Kabelschutzrohres.

Das Kabelschutzrohr, wie ein Kabelkanalrohr, Reparaturrohr oder dergleichen, ist üblicherweise ein Kunststoffstranggussprodukt und dient dazu, verletzungsempfindlichere Kabel, über die elektronische Daten transferiert werden sollen, insbesondere beim und nach dem unterirdischen Verlegen vor Verletzungen zu schützen. Kabelschutzrohre sollen einer hohen impulsartigen Last und einer Dauerdruckbelastung standhalten. Das Kabelschutzrohr sollte daher eine ausreichende Festigkeit besitzen. Ein besonders effektives Verlegesystem wird dann realisiert, wenn die Kabelschutzrohre mittels Luftdruck innerhalb der Kanalschächte eingeschlossen werden. Das Schutzrohrinnere soll das Kabel aufnehmen.

WO 97/08798 A1 offenbart eine Vorrichtung zum Abdichten eines Kabelendes. Ein Abdichtelement ist aus EP 1 710 868 A2 bekannt. DE 20 2010 006 985 U1 betrifft ein wasserdichtes Fixierstück. Eine Verbindungsmuffe ist aus DE 10 2004 056 859 B3 bekannt. DE 198 48 216 A1 offenbart eine abdichtende Verschraubung.

DE 198 49 941 C1 beschäftigt sich mit der technischen Schwierigkeit, die freien Enden zweier sich gegenüberliegender Kabelschutzrohre miteinander fluiddicht zu verbinden. Die dabei eingesetzte Klemmmuffenverbindung hat zwei Halbschalen, die an deren Längsrandseiten jeweils zueinander passende Keilvorsprungspaare aufweisen, welche mit in Axialrichtung zu verschiebenden Verschlussklammern in Eingriff bringbar sind, um die beiden Halbschalen in Umfangsrichtung an den Längsrandseiten aneinander zu drücken. Zwischen den Halbschalen und dem Kabelschutzrohr ist eine elastische Dichtungsmatte angeordnet.

Bei einer gattungsgemäßen Verschlussvorrichtung für ein Kabelschutzrohrende gemäß EP 1 289 087 B1 soll das Kabelschutzrohr an dem offenen Ende fluiddicht und gegen das Eindringen von Partikeln von außen abgedichtet werden. Dabei soll die dichtende Verschlussvorrichtung sowohl ein Abdichten gegenüber der insbesondere zylindrischen Außenseite des Kabelschutzrohrs als auch gegenüber dem häufig ebenfalls zylindrischen Kabel, das unter Umständen aus der Verschlussvorrichtung zum weiteren Anschluss herausragen soll, ermöglichen. Bei dem ersten Betriebszustand verschließt die Verschlussvorrichtung das betreffende Ende des Kabelschutzrohres. Bei dem zweiten Betriebszustand ist die Verschlussvorrichtung dazu ausgelegt, ein fluiddichtes Durchragen des Kabels aus dem Kabelschutzrohrende und aus der ansonsten das Kabelschutzrohrende abdichtenden Verschlussvorrichtung zu ermöglichen.

Die gattungsgemäße Verschlussvorrichtung hat eine Klemmstruktur, die einen inneren Klemmraum definiert und beispielsweise aus einem starren Kunststoffmaterial gefertigt ist. Die Klemmstruktur hat einen Mehrschalenaufbau bestehend aus einer geschlitzten Außenklemmhülse oder -klammer und zwei gegenüber der Außenklemmhülse radial innen liegenden, starren Halbschalen, die mit deren Längsrandseiten aneinander gelegt den insbesondere zylindrischen Klemminnenraum begrenzen. In dem Klemmraum ist eine gummielastische Dichtungshülse angeordnet, in deren Inneren das Kabelschutzrohrende einzuführen ist. Die zylindrische Innenabmessung des Klemminnenraums der Klemmstruktur ist geringfügig kleiner als die zylindrische Außenabmessung der Dichtungshülse, um im montierten Zustand radial nach innen wirkende Klemmkräfte auf die Dichtungshülse ausüben zu können. Um die Klemmkräfte dauerhaft und kontrolliert aufzubringen, haben die Halbschalen außenseitig einen schwalbenschwanzförmigen Verschlusskeil, dessen Breite in Axialrichtung stetig zunimmt und der formkomplementär zu einer schwalbenschwanzförmigen Aussparung an der Innenseite der geschlitzten Außenklemmhülse ausgebildet ist. Beim axialen Aufschieben der Außenklemmhülse auf die Halbschalen im entsprechenden Eingriff der Schwalbenschwanzformen werden die Halbschalen aneinander gedrückt, bis sich deren Längsrandseiten berühren. Ein weiteres Verringern des Volumens des Klemminnenraums ist dann nicht mehr möglich.

Das Innere oder die Innenaufnahme der Dichtungshülse hat zwei zueinander axial und radial abgesetzte, insbesondere zylindrische Innenkonturabschnitte, von denen eine eine umlaufende, radial nach innen weisende Schutzrohrdichtfläche, die mit dem Kabelschutzrohr dichtend umgreifend in Eingriff kommt, und die andere eine umlaufende radial nach innen weisende Kabeldichtfläche bilden, die mit dem Kabel dichtend in Eingriff kommt. Aufgrund der radial wirkenden Klemmkräfte ist es auch bei größeren Fertigungstoleranzen gewährleistet, dass sich beide umlaufende Dichtflächen zuverlässig bilden. Auf diese Weise ist das Kabelschutzrohrende gegen fluidische Einflüsse von außen abgedichtet.

Die gattungsgemäße Verschlussvorrichtung für ein Kabelschutzrohr hat sich in der Praxis bewährt. Allerdings zeigte sich insbesondere bei der Montage der gattungsgemäßen Verschlusseinrichtung nach EP 1 289 087 B1 durch wenig geschultes Bedienpersonal, dass beim Einschieben des Kabelschutzrohrs an einem axialen Anschlagübergang zwischen dem ersten und dem zweiten Innenkonturabschnitt axiale Druckkräfte auf die Dichtungshülse ausgeübt werden, welche Verformungen und Verwerfungen des Elastomermaterials im Bereich der Kabeldichtfläche bewirken. Bei übermäßig großen axialen Kräften aufgrund unerfahrenem Bedienpersonal können diese Verformungen sogar zu Unterbrechungen der umlaufenden Kabeldichtfläche führen, was zu einem Verlust der Dichtigkeitsfunktion der Verschlusseinrichtung führen könnte. Des Weiteren kann ein unvorsichtiges Bedienpersonal beim Einlegen und Einführen des Kabels selbst eine Verletzung des Innenkonturabschnitts am Anschlagsübergang von der Kabelschutzrohrfläche zur Kabeldichtfläche verursachen, was ebenfalls die Dichtigkeit beeinträchtigt.

Aufgabe der Erfindung ist es, die Nachteile des Stands der Technik zu überwinden, insbesondere die Montage- und Bedienergonomie für das Montieren der gattungsgemäßen Verschlussvorrichtung zu verbessern.

Diese Aufgabe wird durch die Merkmale von Anspruch 1 gelöst. Danach ist eine Vorrichtung zum dichtenden Verschließen eines Endes eines mit einem Kabel belegbaren Kabelschutzrohres vorgesehen. Die Verschlussvorrichtung hat eine Klemmstruktur mit einem Aufnahmeinnenraum, der insbesondere größtenteils durch die Klemmstruktur begrenzt ist. In dem Aufnahmeinnenraum ist eine insbesondere gummielastische Dichtungshülse angeordnet. Die Dichtungshülse ist ein Elastomerkörper, von dem zumindest ein Teil in einer Hülsenform ausgebildet ist und in dessen Inneren das Kabelschutzrohrende sowie dessen daran anschließender Rohrabschnitt aufgenommen werden soll. Die insbesondere zylindrische Innenkontur der Dichtungshülse ist derart gestaltet, dass zwei axial und radial voneinander abgesetzte, insbesondere zylindrische Innenkonturabschnitte gebildet sind, um an einem ersten Innenkonturabschnitt eine umlaufende Schutzrohrdichtfläche mit dem Kabelschutzrohr und an einem zweiten Innenkonturabschnitt eine weitere umlaufende Kabeldichtfläche mit dem Kabel zu bilden. Beide Innenkonturabschnitte, ergo beide umlaufende Dichtflächen, sind derart voneinander abgesetzt getrennt, dass die jeweiligen Dichtflächenabschnitte für das Schutzrohr und für das Kabel nicht ineinander übergehen.

Erfindungsgemäß ist zwischen der Schutzrohrdichtfläche und der Kabeldichtfläche eine trichterförmige Innenkontur-Verjüngung geformt, die insbesondere weder mit dem Kabelschutzrohr noch mit dem Kabel im montierten Zustand des mit dem Kabel belegten Kabelschutzrohres in Kontakt kommt. Beim Montieren kann das Kabel, insbesondere dessen vorschiebendes Ende, vorübergehend die trichterförmige Innenkontur-Verjüngung berühren.

Die Klemmstruktur kann zwei Halbschalen aufweisen, die mit ihren Längsrändern aneinander gelegt einen insbesondere zylindrischen Aufnahmeinnenraum begrenzen. Des Weiteren hat die Verschlussvorrichtung eine Außenklemmhülse oder -klammer aus starrem Material zum Aneinanderdrücken, insbesondere Pressen, der axialen Halbschalenlängsränder, wodurch das Volumen des Aufnahmeinnenraums minimiert ist. Des Weiteren hat die Verschlussvorrichtung eine in dem Innenraum der Halbschalen angeordnete, gummielastische Dichtungshülse zur Aufnahme des Kabelschutzrohrendes. Es zeigte sich, dass mit der erfindungsgemäßen Maßnahme, einen Innentrichter zwischen den beiden Dichtflächen bereitzustellen, das Durchführen des Kabels durch die Dichtungshülse in Axialrichtung deutlich erleichtert wird und ein Verhaken des Kabels im Bereich der radial abgesetzten Kabeldichtfläche verhindert wird. Außerdem erhöhte sich überraschenderweise die Dichtungszuverlässigkeit der Verschlussvorrichtung in Vergleich zu einem abrupten Innenabsatz zwischen der Schutzrohrdichtfläche und der Kabeldichtfläche. Es zeigte sich, dass sich eine stabilere Dichtlippenbildung bei der Kabeldichtfläche einstellt, wenn ein trichterförmiger Übergang zwischen beiden Dichtflächen realisiert ist, selbst wenn erhöhte Montagekräfte beim Einschieben des Kabelschutzrohrendes in die Dichtungshülse am axialen Ende der Schutzrohrdichtfläche durch eine eventuell unerfahrene Bedienperson aufgebracht werden.

Weitere Vorteile und Merkmale der Erfindung sind in den Unteransprüchen angegeben.

Bei einer bevorzugten Ausführung der Erfindung schließt die Kabeldichtfläche insbesondere stufen- oder querschnittssprungfrei unmittelbar an die trichterförmige Innenkontur-Verjüngung axial an. Bei einer besonderen Ausführung der Erfindung schließt auch die Schutzrohrdichtfläche unmittelbar in Axialrichtung betrachtet an die trichterförmige Innenkontur-Verjüngung axial an. Auf diese Weise werden die Dichtflächen so nah wie möglich an das abzudichtende Schutzrohrende positioniert. Im axialen Verlauf ist die trichterförmige Innenkontur-Verjüngung in Axialrichtung kontinuierlich ausgebildet.

Bei einer bevorzugten Ausführung der Erfindung ist im Bereich eines Axialübergangs zwischen dem die Schutzrohrdichtfläche bildenden Innenkonturabschnitt und der trichterförmigen Innenkontur-Verjüngung ein Axialanschlag ausgebildet, der eine Verlagerung des Kabelschutzrohres axial hin zur Kabeldichtfläche begrenzt. Der Axialanschlag ist insbesondere als Innenabsatz ausgebildet, der vorzugsweise eine einer Rohrstärke des Kabelschutzrohres entsprechende Radialhöhe aufweist. Der Innenabsatz ist vorzugsweise als rein radial nach innen ragender Vorsprung ohne Axialrichtungskomponente, also als ein 90°-Vorsprung, gestaltet. Aufgrund der trichterförmigen Querschnittsverjüngung zwischen der Kabeldichtfläche und dem von der Kabeldichtfläche axial abgesetzten Anschlag für das Kabelschutzrohrende ist gewährleistet, dass beim Einschieben des Kabelschutzrohres eine Druckspannung und sogar eine Verwerfung im Bereich der Kabeldichtfläche weitestgehend vermieden werden.

Bei einer bevorzugten Ausführung der Erfindung hat die trichterförmige Innenkontur-Verjüngung eine gerade Kreiskegelstumpfform, wobei insbesondere ein Neigungswinkel der Wandflächen der Kreiskegelstumpfform gegenüber der Axialrichtung bei zwischen 45° und 65°, vorzugsweise bei etwa 55°, liegt. Mit der geraden Kegelstumpfform ist zum einen sichergestellt, dass ein Einfädeln des Kabels in den Kabeldichtflächenbereich ohne besondere technische Schulung des Bedienpersonals gelingt, zum anderen eine ausreichende große Entfernung der beiden Dichtflächen zueinander besteht und dennoch die beiden umlaufenden Dichtflächen nahe genug an dem Schutzrohrende liegen.

Vorzugsweise ist eine Hülsenwand der elastischen Dichtungshülse im Bereich der trichterförmigen Innenkontur-Verjüngung radial verstärkt. Auf diese Weise wird sichergestellt, dass, sollten Belastungen in diesem Bereich beispielsweise beim Anstoßen des Kabelschutzrohrendes ausgeübt werden, diese Lasten ausreichend gut ausgeglichen werden, ohne die Funktionstüchtigkeit der benachbarten Dichtfläche zu beeinflussen. Alternativ oder zusätzlich dazu kann an einer insbesondere zylindrischen Außenkontur der Dichtungshülse im wesentlichen auf axialer Höhe der Kabeldichtfläche ein Radialvorsprung vorgesehen sein, der als Anschlag zur Begrenzung der Verlagerbarkeit der Dichtungshülse relativ zu den Halbschalen dient. Hierzu können die Halbschalen entsprechend einen Innenvorsprung aufweisen, der mit dem Radialvorsprung zusammenwirkt.

Bei einer bevorzugten Ausführung der Erfindung soll im axialen Anschluss der Kabeldichtfläche ein sich axial erstreckender Dichtungswulst insbesondere an einem geschlossenen Axialende der Dichtungshülse anschließen. Der Dichtungswulst und die Dichtungshülse sind vorzugsweise aus einem Gummistück geformt, insbesondere gespritzt. Am Anschlussbereich des Dichtungswulstes an die Dichtungshülse ist eine Sollreißstelle realisiert, die vorzugsweise durch eine Wandstärkenreduzierung der Dichtungshülse im Bereich der Kabeldichtfläche realisiert ist. Bringt das Bedienpersonal axiale Abreißkräfte an dem Dichtungswulst auf, so reißt dieser an der Sollreißstelle von dem übrigen Körperteil der Dichtungshülse ab, wodurch die Verschlussvorrichtung in den zweiten Betriebszustand gebracht wird und die Dichtungshülse im Bereich des Innenkonturabschnitts für die Kabeldichtfläche freigelegt wird, um ein fluiddichtes Durchragen des Kabels aus der Dichtungshülse zuzulassen.

Alternativ oder zusätzlich dazu kann sich der die Kabeldichtfläche bildende Innenkonturabschnitt reduzierter radialer Höhe in den Dichtungswulst sacklochförmig hinein erstrecken, wobei die Sollreißstelle derart auf axialer Höhe der Kabeldichtfläche liegt, dass beim abgerissenen Dichtungswulst zumindest ein Teil der umlaufenden Kabeldichtfläche unverletzt an der verbleibenden Dichtungshülse ausgebildet ist.

Ein weiterer unabhängiger Erfindungsaspekt gemäß Anspruch 7, der mit den oben genannten Erfindungsdetails kombinierbar ist, besteht darin, die gattungsgemäße Verschlusseinrichtung derart auszubilden, dass die Halbschalen an den Längsrandseiten aneinander gelegt zumindest abschnittsweise eine gerade Kreiskegelstumpfform und eine Innenseite der Außenklemmhülse zumindest abschnittsweise eine gerade Kreiskegelstumpfform formen. Dabei sind die positive und negative gerade Kreiskegelstumpfform der Halbschalen bzw. der Außenklemmhülse derart aufeinander abgestimmt, dass bei einem axialen Aufschieben der Außenklemmhülse auf den Halbschalen eine willkürliche Umfangsposition der Außenklemmhülse relativ zu den Halbschalen eingenommen werden kann.

Es zeigte sich überraschenderweise, dass trotz einer vermeintlich ungünstigen Positionierung der geschlitzten Außenklemmhülse mit dem längs durchlaufenden Schlitz auf Umfangshöhe der freien Anlageränder der Halbschalen ausreichend große Klemmkräfte zwischen den Halbschalen und voll funktionsfähige Dichtflächen realisiert werden. Insofern spielt es beim Aufschieben der erfindungsgemäßen Außenklemmhülse auf die Halbschalen keine Rolle mehr, in welcher Umfangsposition der geschützten Außenklemmhülse relativ zu den Halbschalen dies geschieht.

Weitere Eigenschaften, Vorteile und Merkmale der Erfindung werden durch die folgende Beschreibung einer bevorzugten Ausführung der Erfindung anhand der beiliegenden Zeichnungen deutlich, in denen zeigen:
- Figur 1: eine perspektivische Explosionsansicht der erfindungsgemäßen Verschlussvorrichtung für ein mit einem Kabel belegten Kabelschutzrohr;
- Figur 2: eine perspektivische Ansicht der Verschlussvorrichtung nach Figur 2 im montierten Zustand;
- Figur 3: eine perspektivische, teilweise aufgeschnittene Darstellung der Verschlussvorrichtung nach den Figuren 1 und 2;
- Figur 4: eine Querschnittsansicht einer Halbschale der Verschlussvorrichtung nach den Figuren 1 bis 3; und
- Figur 5: eine Querschnittsansicht einer Dichtungshülse der Verschlussvorrichtung nach den Figuren 1 bis 3.

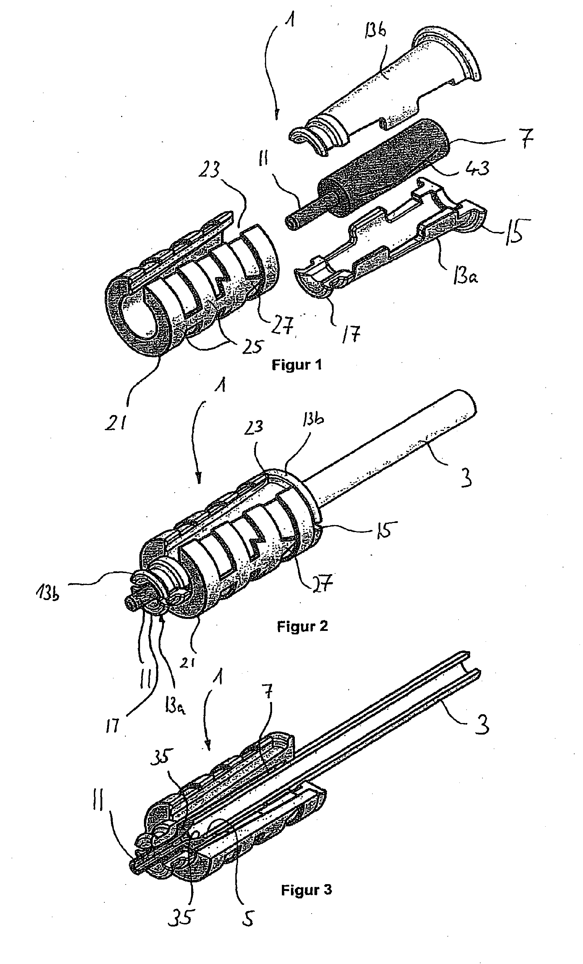

In den Figuren 1 bis 3 ist die bevorzugte Ausführung einer erfindungsgemäßen Vorrichtung zum dichtenden Verschließen eines Endes eines mit einem Kabel belegbaren Kabelschutzrohres gezeigt. Unter einem dichtenden Verschließen sei insbesondere zu verstehen, dass das betreffende Ende des Kabelschutzrohres gegenüber insbesondere mit Druck von wenigstens 1 bar beaufschlagter Flüssigkeit im wesentlichen frei von der Flüssigkeit bleibt.

In den Figuren 1 bis 3 ist die erfindungsgemäße Verschlussvorrichtung im Allgemeinen mit Bezugsziffer 1 versehen, wobei in Figur 2 und 3 ein Kabelschutzrohr mit der Bezugsziffer 3 angedeutet ist. Das Kabelschutzrohr 3 besteht üblicherweise aus einem transparenten Kunststoff, das einen einfarbigen Streifen zur Identifikation unterschiedlicher Kabelschutzrohre aufweist. Das Kabelschutzrohr 3 ist innen- und außenseitig zylindrisch geformt.

Wie in Figur 3 dargestellt ist, ist das Kabelschutzrohr 3 in eine gummielastische Dichtungshülse 7 eingeführt, wobei ein zylindrischer Innenraum der Dichtungshülse 7 an einem Ende zumindest für einen ersten Betriebszustand sacklochartig fluiddicht geschlossen ist. An dem geschlossenen Ende der Dichtungshülse 7 ist ein sich axial erstreckender Stiftfortsatz 11 in dem Dichtungswulst vorgesehen, der detaillierter später erläutert wird.

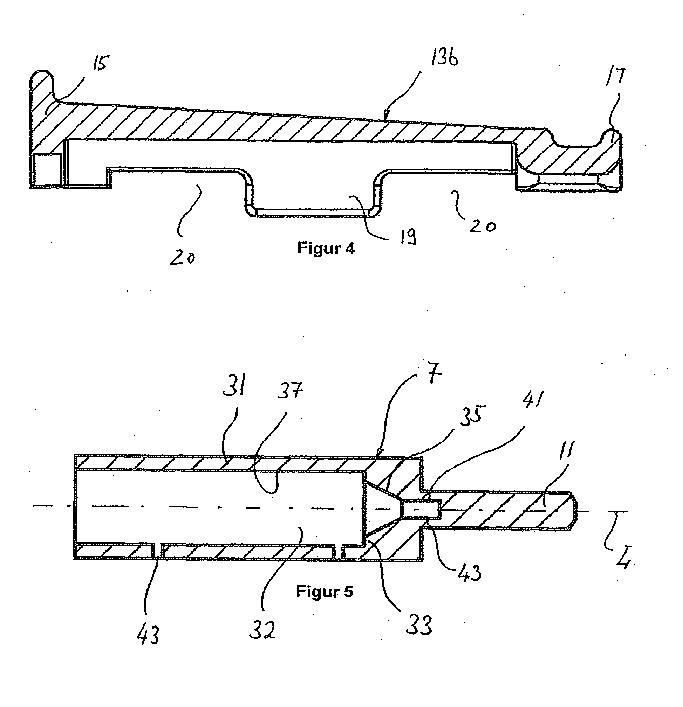

Die Dichtungshülse 7 umgreifend sind zwei im wesentlichen symmetrisch aufgebaute Halbschalen 13a, 13b als Paar vorgesehen, welche aneinander montiert außenseitig eine Kegelstumpfgestalt aufweisen und innenseitig zylindrisch sind. Die aneinander gefügten Halbschalen haben ein geweitetes Ende 15 und ein schmales Ende 17. Zwischen den beiden Enden 15, 17 ist ein Schalenkörper der beiden ineinander gefügten Halbschalen 13a, 13b mit einer geraden kreiskegelstumpfförmigen Außenseite gebildet. Um eine definierte Position der beiden Halbschalen 13a, 13b zueinander zu definieren, weisen die jeweiligen Halbschalen an deren Längsrändern Vorsprünge oder Zähne 19 sowie dazu benachbarte Vertiefungen 20 auf, die negativ-formkomplementär an dem jeweils gegenüberliegenden Längsrand der anzufügenden weiteren Halbschale ausgeführt sind (Fig. 4). Auf diese Weise soll eine einzige Montageposition zwischen den beiden Halbschalen 13a, 13b zugelassen werden, um Montagefehler durch eine ungeübte Bedienperson zu vermeiden.

Die Halbschalen 13a, 13b definieren außerdem einen idealzylindrischen Innenraum, der im wesentlichen formkomplementär zum idealzylindrischen Aufnahmekörper 31 der Dichtungshülse 7 ausgeführt ist. Die zylindrische Außenabmessung des Aufnahmekörpers 31 der Dichtungshülse 7 ist geringgefügig größer als der idealzylindrische Innenraum der Halbschalen 13a, 13b abgemessen, so dass, wenn die Dichtungshülse 7 in dem zylindrischen Innenraum eingesetzt ist und die Halbschalen 13a, 13b berührend aneinander gefügt sind, auf den Aufnahmekörper 31 eine Druckvorspannung ausgeübt wird.

In Figur 4 ist eine Halbschale 13b dargestellt, bei der der zylindrische Innenraum sowohl für den Stiftfortsatz 11 als auch für den Aufnahmekörper 31 ersichtlich ist.

Des Weiteren umfasst die erfindungsgemäße Verschlusseinrichtung 1 eine Außenklemmklammer 21, die einen durchgehenden in Längsrichtung erstreckenden Schlitz 23 aufweist, aufgrund dessen die Außenklemmklammer 21 elastisch aufgeweitet werden kann, um radial nach innen wirkende Rückstellkräfte gezielt aufzubauen und an die Halbschalen 13a, 13b aneinander zu drücken und den Körperabschnitt der Dichtungshülse 7 dauerhaft auf Druck vorzuspannen.

Um die Steifigkeit der geschützten Außenklemmklammer 21 zu erhöhen, sind umlaufende Verstärkungsrippen 25 an der im wesentlichen zylindrischen Außenseite der Außenklemmklammer 21 angeformt. Um einer Bedienperson das Montieren der Außenklemmklammer 21 zu erleichtern, ist an deren Außenseite ein Pfeil 27 angeordnet, der die richtige axiale Aufschieberichtung der Außenklemmklammer 21 auf die Halbschalen 13a, 13b andeutet.

Der Innenraum der Außenklemmklammer 21 ist wie der Mittelkörper der aneinander gefügten Halbschalen 13a, 13b mit einer geraden Kegelstumpfform ausgeführt, wobei das weite Ende 15 deutlich größer als das schmale Ende 17 der Halbschalenanordnung ist. Durch Aufschieben der Außenklemmklammer 21 in Axialrichtung kommen die Außenseite des Mittelteils der Halbschalen 13a, 13b in Eingriff mit der Innenseite der Außenklemmklammer 21, wodurch allmählich durch Handkraft radial nach innen gerichtete Klemmkräfte erzeugt werden können, die das Zusammenhalten der Halbschalen 13a, 13b und das Druckvorspannen der Dichtungshülse 7 bewirken.

Im Folgenden wird der Aufbau der erfindungsgemäßen Dichtungshülse 7 anhand von Figur 5 erläutert. Die Dichtungshülse 7 umfasst als zwei Hauptkörperteile, nämlich den zylindrischen Aufnahmekörper 31 und den Stiftfortsatz 11. Beide liegen konzentrisch zur axialen Längsachse L der Verschlussvorrichtung 1. Der Aufnahmekörper 31 definiert einen Innenraum, der sich zur Axialrichtung rotationsförmig erstreckt.

Wie bei dem ersten Betriebszustand gemäß Figur 5 ersichtlich, ist der Innenraum 32 des zylindrischen Aufnahmekörpers 31 auf einer Seite (links) offen, auf der anderen Seite (rechts) geschlossen. Der Innenraum 32 besteht im wesentlichen aus wenigstens drei Innenkonturabteilen, einem ersten weiten Innenkonturabschnitt 37 und einem radial abgesetzten zweiten Innenkonturabschnitt 41. Beide Innenkonturabschnitte 37, 41 sind zylindrisch ausgeführt, wobei der Innendurchmesser des Innenkonturabschnitts 37 mehr als doppelt so groß wie der schmale Innenkonturabschnitt 41 ist. Der weite Innenkonturabschnitt 37 dient dazu, eine Schutzrohrdichtfläche mit dem eingesetzten Kabelschutzrohr 3 zu bilden. Der schmale zylindrische Innenkonturabschnitt 41 dient dazu, eine umlaufende Dichtfläche mit dem Kabel (nicht näher dargestellt) zu bilden, mit dem das Kabelschutzrohr 3 zu bewegen ist.

Wie in Figur 5 ersichtlich ist, sind beide zylindrischen Innenkonturabschnitte 37, 41 durch zwei weitere Funktionskonturabschnitte voneinander in Axialrichtung getrennt. Schutzrohrdichtflächenseitig ist ein radial nach innen ragender Anschlagsabsatz 33 vorgesehen, der dazu dient, wie in Figur 3 ersichtlich ist, eine axiale Verlagerung des Kabelschutzrohres 3 bei dessen Montierung in Richtung auf den Stiftfortsatz 11 zu begrenzen. Die radiale Höhe des Anschlagsabsatzes 33 soll wenigstens der Stärke des Kabelschutzrohres 3 entsprechen. Kabeldichtflächenseitig ist einen Innenkontur-Verjüngung 35 vorgesehen, die sich in Richtung der Kabeldichtfläche des schmalen Innenkonturabschnitts 41 verjüngt. Die Innenkontur-Verjüngung ist in einer Trichterform gestaltet. Die trichterförmige Innenwand liegt in einem 55°-Winkel zur Längsachse L. Die Innenkontur-Verjüngung 35 hat eine gerade Kreiskegelstumpfform.

Die Innenkontur-Verjüngung 35 dient dazu, das in das Kabelschutzrohr 3 eingebrachte Kabel (nicht dargestellt) hin zu dem schmalen Innenkonturabschnitt 41 einzufädeln, der sich unmittelbar axial an die trichterförmige Innenkontur-Verjüngung 35 anschließt.

Wie in Figur 3 ersichtlich ist, liegt die Außenseite des montierten Kabelschutzrohrs 3 direkt an dem weiten Innenkonturabschnitt 37 an, wodurch eine umlaufende Schutzrohrdichtfläche mit dem Kabelschutzrohr 3 gebildet ist.

In dem Aufnahmekörper 31 ist ein Schlitz 43 ausgeführt, der dazu dient, Verwerfung beim Einspannen der Dichtungshülse 7 innerhalb der Halbschalen 13a, 13b zu vermeiden.

Wie oben angedeutet ist, hat die erfindungsgemäße Verschlussvorrichtung zwei Betriebszustände. Der eine (Figur 2, 3) betrifft das vollständige Abschließen des Kabelschutzrohrendes. Der andere Betriebszustand, der zeichnerisch nicht dargestellt ist, betrifft das fluiddichte Durchragen des Kabels durch die Verschlussvorrichtung hindurch.

Um von dem einen Betriebszustand zu dem anderen Betriebszustand zu gelangen, also das Kabel durch die Verschlussvorrichtung, insbesondere durch die Dichtungshülse 7 hindurch ragen zu lassen, ist zwischen dem Aufnahmekörper 31 der Dichtungshülse 7 und dem Stiftfortsatz 11 eine Sollreißstelle 43 ausgeführt, indem das die Dichtungshülse 7 bildende Elastomermaterial, wie Gummi, dort geschwächt ist. Wie in Figur 5 ersichtlich, ist die Sollreißstelle 43 auf axialer Höhe des schmalen Innenkonturabschnitts 41 bereitgestellt. Beim Abreißen des Stiftfortsatzes 11 wird dieser derart von dem Aufnahmekörper 31 der Dichtungshülse 7 getrennt, dass stets noch ein unversehrte Innenkonturabschnitt 41 bestehen bleibt, an dem eine umlaufende Kabeldichtfläche mit dem Kabel gebildet werden kann.

Es zeigte sich, dass sich durch die trichterförmige Innenkontur-Verjüngung 35 eine stabile und zuverlässige Dichtlippe im Bereich des Innenkonturabschnitts 37 bildet und das Einfädeln des Kabels in diesen Innenkonturbereich vereinfacht wird. Zudem wird der Kabeldichtflächenbereich aufgrund der vereinfachten Montage vor Verletzungen durch das Kabel selbst geschützt.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Verschlussvorrichtung
- 3: Kabelschutzrohr
- 7: Dichtungshülse
- 11: Stiftfortsatz
- 13a, 13b: Halbschalen
- 15: geweitetes Ende
- 17: schmales Ende
- 19: Fügezahn
- 20: Vertiefung
- 21: Außenklemmklammer
- 23: Schlitz
- 25: Verstärkungsrippen
- 27: Pfeil
- 31: Aufnahmekörper
- 32: Innenraum
- 33: Anschlagsabsatz
- 35: Innenkontur-Verjüngung
- 37: weiter Innenkonturabschnitt
- 41: schmaler Innenkonturabschnitt
- 43: Sollreißstelle
- L: Längsachse

## Patentansprüche

1. Vorrichtung zum dichtenden Verschließen eines Endes eines mit einem Kabel belegbaren Kabelschutzrohres (3), umfassend:
- eine Klemmstruktur mit einem Aufnahmeinnenraum und
- eine in dem Aufnahmeinnenraum angeordnete, elastische Dichtungshülse (7) zur Aufnahme des Kabelschutzrohrendes, die zwei axial und radial voneinander abgesetzte, insbesondere zylindrische Innenkonturabschnitte (37, 41) aufweist, um eine umlaufende Schutzrohrdichtfläche mit dem Kabelschutzrohr (3) und eine weitere umlaufende Kabeldichtfläche mit dem Kabel zu bilden;
**dadurch gekennzeichnet, dass**
zwischen der Schutzrohrdichtfläche und der Kabeldichtfläche eine trichterförmige Innenkontur-Verjüngung (35) geformt ist und im axialen Anschluss der Kabeldichtfläche ein sich axial erstreckender Dichtungsfortsatz an der Dichtungshülse (7) anschließt, wobei sich der die Kabeldichtfläche bildende Innenkonturabschnitt (37, 41) in den Dichtungsfortsatz in Form eines Sacklochs hineinerstreckt.

2. Vorrichtung nach Anspruch 1, **dadurch gekennzeichnet, dass** der Innenkonturabschnitt (37, 41) für die Kabeldichtfläche unmittelbar, insbesondere stufenfrei, an die trichterförmige Innenkontur-Verjüngung (35) axial anschließt und/oder der Innenkonturabschnitt (37, 41) für die Schutzrohrdichtfläche unmittelbar an die trichterförmige Innenkontur-Verjüngung (35) axial anschließt.

3. Vorrichtung nach Anspruch 1 oder 2, **dadurch gekennzeichnet, dass** im Bereich eines Axialübergangs zwischen dem die Schutzrohrdichtfläche bildenden Innenkonturabschnitt (37, 41) und der trichterförmigen Innenkontur-Verjüngung (35) ein Axialanschlag ausgebildet ist, der eine Verlagerung des in die Dichtungshülse (7) eingesetzen Kabelschutzrohres (3) axial hin zur Kabeldichtfläche begrenzt und insbesondere als Innenabsatz ausgebildet ist, der vorzugsweise eine einer Rohrstärke des Kabelschutzrohres (3) entsprechende Radialhöhe aufweist.

4. Vorrichtung nach einem der vorstehenden Ansprüche, **dadurch gekennzeichnet, dass** die trichterförmige Innenkontur-Verjüngung (35) eine gerade Kreiskegelstumpfform aufweist, wobei insbesondere ein Neigungswinkel der Wandflächen der Kreiskegelstumpfform gegenüber der Axialrichtung bei zwischen 45° und 65°, vorzugsweise bei etwa 55°, liegt.

5. Vorrichtung nach einem der vorstehenden Ansprüche, **dadurch gekennzeichnet, dass** eine Hülsenwand der Dichtungshülse (7) im Bereich der trichterförmigen Innenkontur-Verjüngung (35) verstärkt ist und/oder eine insbesondere zylindrische Außenkontur der Dichtungshülse (7) im wesentlichen auf axialer Höhe der Kabeldichtfläche einen Radialvorsprung aufweist, der als Anschlag zur Begrenzung der Verlagerbarkeit der Dichtungshülse (7) relativ zu den Halbschalen (13a, 13b) dient.

6. Vorrichtung nach einem der vorstehenden Ansprüche, **dadurch gekennzeichnet, dass** der Dichtungsfortsatz und die Dichtungshülse (7) aus einem Gummistück gespritzt sind und am Anschussbereich des Dichtungsfortsatzes an die Dichtungshülse (7) eine Sollreißstelle (43) realisiert ist, die vorzugsweise durch eine Wandstärkenreduzierung der Dichtungshülse (7) im Bereich der Kabeldichtfläche realisiert ist..

7. Vorrichtung nach einem der vorstehenden Ansprüche oder nach dem Oberbegriff von Anspruch 1, **dadurch gekennzeichnet, dass** die Klemmstruktur zwei Halbschalen (13a, 13b), die aneinandergelegt innenseitig den Klemmraum und außenseitig zumindest abschnittsweise eine gerade Kreiskegelstumpfform definieren, und eine Außenklemmklammer (21) zum Klemmen der Halbschalen (13a, 13b) aneinander, die innenseitig zumindest abschnittsweise eine gerade Kreiskegelstumpfform definiert, aufweist, so dass bei einem axialen Aufschieben der Außenklemmklammer (21) auf die Halbschalen (13a, 13b) in einer willkürlichen Umfangsposition der Außenklemmklammer (21) relativ zu den Halbschalen (13a, 13b) ein Klemmeingriff zwischen der Außenklemmklammer (21) und den Halbschalen (13a, 13b) gebildet ist.

## Claims

1. Device for sealingly occluding an end of a cable protecting tube (3) to which a cable is allocatable, including:
- a clamping structure with an interior reception space and
- an elastic sealing sleeve (7) for receiving of the end of the cable protecting tube, said sealing sleeve (7) being arranged in the interior reception space and comprising two particularly cylindrical interior contour sections (37, 41) radially and axially offset from one another for providing a circumferential protecting tube sealing surface with the cable protecting tube (3) and a further circumferential cable sealing surface with the cable;
**characterised in that**
a funnel-shaped interior contour-tapering (35) is formed between the protecting tube sealing surface and the cable sealing surface and **in that** an axially extending sealing prolongation is attached in axial connection to the cable sealing surface, wherein the interior contour section (37, 41) providing the cable sealing surface extends into the sealing prolongation in the form of a blind hole.

2. Device according to claim 1, **characterised in that** the interior contour section (37, 41) for the cable sealing surface is attached immediately in the axial direction, in particular free of steps, to the funnel-shaped interior contour-tapering (35) and/or **in that** the interior contour section (37, 41) for the protecting tube sealing surface is attached immediately to the funnel-shaped interior contour-tapering (35) in the axial direction.

3. Device according to claim 1 or 2, **characterised in that** in the region of an axial transition between the interior contour section (37, 41) providing the protecting tube sealing surface and the funnel-shaped interior contour-tapering (35) an axial stop is formed which limits a displacement of the cable protecting tube (3) inserted in the sealing sleeve (7) in axial direction towards the cable sealing surface and which is in particular formed as an interior ledge which preferably has a radial height corresponding to a protecting tube thickness of the cable protecting tube (3).

4. Device according to one of the preceding claims, **characterised in that** the funnel-shaped interior contour-tapering (35) has a straight truncated cone shape, wherein in particular an inclination angle of the wall surfaces of the circular truncated cone shape relative to the axial direction is between 45° and 65°, preferably at about 55°.

5. Device according to one of the preceding claims, **characterised in that** in the region of the funnel-shaped interior contour-tapering (35) a sleeve wall of the sealing sleeve (7) is reinforced and/or **in that** an in particular cylindrical exterior contour of the sealing sleeve (7) essentially in the axial height of the cable sealing surface comprises a radial protrusion which serves as a stop for limiting the displaceability of the sealing sleeve (7) relative to the half shells (13a, 13b).

6. Device according to one of the preceding claims, **characterised in that** the sealing prolongation and the sealing sleeve (7) are injected as one rubber piece and **in that** a predetermined ripping point (43) is realised in the region of attachment of the sealing prolongation on the sealing sleeve (7), which predetermined ripping point (43) is preferably realised as a reduction in wall thickness of the sealing sleeve (7) in the region of the cable sealing surface.

7. Device according to one of the preceding claims or according to the preamble of claim 1, **characterised in that** the clamping structure comprises two half shells (13a, 13b) which, when abutting against one another, internally define the clamping space and externally define at least sectionally a straight circular truncated cone shape, and an exterior clamping clamp (21) for clamping the half shells (13a, 13b) against one another, which internally defines at least sectionally a straight circular truncated cone shape, so that during a step of axially sliding the exterior clamping clamp (21) onto the half shells (13a, 13b) in any arbitrary selected circumferential position of the exterior clamping clamp (21) relative to the half shells (13a, 13b) a clamping engagement is provided between the exterior clamping clamp (21) and the half shells (13a, 13b).

## Revendications

1. Dispositif pour la fermeture hermétique d'une extrémité d'une gaine de câble (3) à garnir d'un câble, comprenant :
- une structure de serrage avec un espace intérieur de réception, et
- un manchon d'étanchéité élastique (7), disposé dans l'espace intérieur de réception, pour recevoir l'extrémité de gaine de câble et présentant deux sections de contour intérieur (37, 41), en particulier cylindriques, décalées l'une par rapport à l'autre, afin de former une surface d'étanchéité de gaine avec la gaine de câble (3) et une autre surface d'étanchéité de câble avec le câble ;
**caractérisé en ce qu'**entre la surface d'étanchéité de gaine et la surface d'étanchéité de câble est formée une conicité de contour intérieur (35) en forme d'entonnoir, et **en ce qu'**après la surface d'étanchéité de câble, un prolongement d'étanchéité s'étendant axialement est rattaché axialement au manchon d'étanchéité (7), dans lequel la section de contour intérieur (37, 41) forme la surface d'étanchéité de câble s'étendant dans le prolongement d'étanchéité sous la forme d'un trou borgne.

2. Dispositif selon la revendication 1, **caractérisé en ce que** la section de contour intérieur (37, 41) pour la surface d'étanchéité de câble est rattachée axialement directement, en particulier sans intervalle, à la conicité de contour intérieur (35) en forme d'entonnoir, et/ou **en ce que** la section de contour intérieur (37, 41) pour la surface d'étanchéité de gaine est rattachée axialement directement à la conicité de contour intérieur (35) en forme d'entonnoir.

3. Dispositif selon la revendication 1 ou 2, **caractérisé en ce que** dans la zone d'une transition axiale entre la section de contour intérieur (37, 41) formant la surface d'étanchéité de gaine et la conicité de contour intérieur (35) en forme d'entonnoir est réalisée une butée axiale qui limite un déplacement de la gaine de câble (3) insérée dans le manchon d'étanchéité (7) axialement en direction de la surface d'étanchéité de câble, et en particulier sous la forme d'un décrochement intérieur qui présente de préférence une hauteur radiale correspondant à une épaisseur de tuyau de la gaine de câble (3).

4. Dispositif selon l'une quelconque des revendications précédentes, **caractérisé en ce que** la conicité de contour intérieur (35) en forme d'entonnoir présente une forme de cône de révolution tronqué, dans lequel en particulier un angle d'inclinaison des surfaces de paroi de la forme de cône de révolution tronqué par rapport à la direction axiale est situé entre 45° et 65°, de préférence à environ 55°.

5. Dispositif selon l'une quelconque des revendications précédentes, **caractérisé en ce qu'**une paroi de manchon du manchon d'étanchéité (7) est renforcée dans la zone de la conicité de contour intérieur (35) en forme d'entonnoir et/ou **en ce qu'**un contour extérieur, en particulier cylindrique, du manchon d'étanchéité (7) présente une saillie radiale, substantiellement à la hauteur axiale de la surface d'étanchéité de câble, qui sert de butée pour limiter la possibilité de déplacement du manchon d'étanchéité (7) par rapport aux demi-coques (13a, 13b).

6. Dispositif selon l'une quelconque des revendications précédentes, **caractérisé en ce que** le prolongement d'étanchéité et le manchon d'étanchéité (7) sont extrudés à partir d'un morceau de caoutchouc et **en ce que** dans la zone de raccordement du prolongement d'étanchéité au manchon d'étanchéité (7) un point destiné à la rupture (43) est réalisé qui est réalisé de préférence par une réduction de l'épaisseur de paroi du manchon d'étanchéité (7) dans la zone de la surface d'étanchéité de câble.

7. Dispositif selon l'une quelconque des revendications précédentes ou selon le préambule de la revendication 1, **caractérisé en ce que** la structure de serrage présente deux demi-coques (13a, 13b) qui, placées l'une contre l'autre, définissent à l'intérieur l'espace de serrage et à l'extérieur au moins par endroits une forme de cône de révolution tronqué droite, et une attache de serrage extérieure (21) pour serrer les demi-coques (13a, 13b) l'une contre l'autre, qui définit à l'intérieur au moins par endroits une forme de cône de révolution tronqué droite, de sorte qu'en cas d'emmanchement axial de l'attache de serrage extérieure (21) sur les demi-coques (13a, 13b) dans une position circonférentielle arbitraire de l'attache de serrage extérieure (21) par rapport aux demi-coques (13a, 13b), une mise en prise de serrage est formée entre l'attache de serrage extérieure (21) et les demi-coques (13a, 13b).
